# EUROPÄISCHE PATENTSCHRIFT

(11) **EP 4 416 403 B1**
(45) Veröffentlichungstag und Bekanntmachung des Hinweises auf die Patenterteilung: **24.09.2025**
(21) Anmeldenummer: 22801710.9
(22) Anmeldetag: 29.09.2022
(51) Int. Cl.: F16D 1/10, F16D 1/116

(54) **VERBINDUNGSEINRICHTUNG UND VERBINDUNGSVORRICHTUNG ZUM VERBINDEN EINER ANTRIEBSVORRICHTUNG MIT EINEM STAB SOWIE VERFAHREN ZUM TAUSCHEN EINES RAKELSTABS**
CONNECTING UNIT AND CONNECTING DEVICE FOR CONNECTING A DRIVE DEVICE TO A ROD, AND METHOD FOR EXCHANGING A DOCTOR ROD
DISPOSITIF DE LIAISON ET SYSTÈME DE LIAISON POUR RELIER UN SYSTÈME D'ENTRAÎNEMENT À UNE TIGE ET PROCÉDÉ DE REMPLACEMENT D'UNE TIGE DE RACLE

(30) Priorität: 12.10.2021 DE 102021126351
(43) Veröffentlichungstag der Anmeldung: 21.08.2024
(73) Patentinhaber: Voith Patent GmbH, 89522 Heidenheim (DE)
(72) Erfinder: HENLE, Tobias, 89075 Ulm (DE); APPEL, Nico, 89415 Lauingen (DE); SIES, Tony, 89518 Heidenheim (DE); JOOS, Uwe, 89551 Königsbronn (DE); GRONYCH, Daniel, 89522 Heidenheim (DE); HENNINGER, Christoph, 89522 Heidenheim (DE)
(74) Vertreter: Voith Patent GmbH - Patentabteilung
(86) Internationale Anmeldenummer: PCT/EP2022/077081
(87) Internationale Veröffentlichungsnummer: WO 2023/061763

(56) Entgegenhaltungen:
- EP-A2- 1 707 833
- CN-Y- 201 102 215
- DE-A1- 102021 104 113
- DE-C1- 3 501 262
- US-A- 4 392 759
- US-A- 4 927 286
- US-A1- 2017 232 826
- US-A1- 2020 018 355

## Beschreibung

Die Erfindung betrifft eine Verbindungseinrichtung zum Verbinden einer Antriebsvorrichtung mit einem Stab, insbesondere einem Rakelstab, wobei die Verbindungeinrichtung eine Aufnahmeöffnung aufweist, die ausgebildet ist, ein Verbindungselement eines Stabs axial aufzunehmen, um ein Drehmoment zu übertragen, und wobei die Verbindungeinrichtung eine radial an die AufnahmeÖffnung angrenzende Aussparung aufweist, durch welche ein kraftbeaufschlagtes Formschlusselement der Verbindungseinrichtung in die Aufnahmeöffnung eingreift, wodurch das Verbindungselement axial fixierbar ist. Zudem betrifft die Erfindung eine Verbindungsvorrichtung sowie ein Verfahren zum Tauschen eines Stabs, insbesondere eines Rakelstabs.

In Filmpressen wird zum Behandeln von Materialbahnen beispielsweise aus Papier oder Karton, ein flüssiges oder pastöses Streichmedium mithilfe von Auftragseinheiten übertragen, um Materialeigenschaften sowie Penetration und Oberflächenabdeckung des Materials zu beeinflussen. Dabei wird eine Auftragsmenge des Streichmediums mithilfe von Rakelstäben dosiert. Die Rakelstäbe sind typischerweise in Rakelbetten drehbar gelagert und an einem oder beiden Enden mit einem oder zwei Antrieben über eine Kupplung verbunden und werden von diesem/n angetrieben.

Zum Verbinden eines Rakelstabs mit einem Antrieb sind verschiedenartige Kupplungsanordnungen bekannt, welche den Rakelstab zur Drehmomentübertragung lösbar mit dem Antrieb verbinden. Wenn beim Betrieb Verschleiß an einem Rakelstab auftritt, kann es nötig werden diesen zu tauschen. Durch eine mitunter starke Verschmutzung der Komponenten durch das Streichmedium, kann ein Lösen und Schließen einer Kupplung zwischen Rakelstab und Antrieb aufwändig und zeitintensiv sein, was zu längeren Standzeiten der Filmpresse führen kann.

Hiervon ausgehend ist es eine Aufgabe der Erfindung, eine verbesserte Verbindungseinrichtung vorzuschlagen, welche ein Verbinden bzw. Lösen eines Stabs mit bzw. von einem Antrieb bzw. einer Antriebsvorrichtung ermöglicht. Darüber hinaus soll eine axiale Sicherung des Stabs ermöglicht werden. Zudem soll eine verbesserte Verbindungvorrichtung und ein verbessertes Verfahren zum Tauschen eines Stabs bzw. Rakelstabs vorgeschlagen werden. Dies wird erfindungsgemäß durch die Lehre der unabhängigen Ansprüche erreicht. Vorteilhafte Ausbildungen der Erfindung sind Gegenstand der Unteransprüche.

Zur Lösung der Aufgabe wird in einem ersten Aspekt eine Verbindungseinrichtung zum Verbinden einer Antriebsvorrichtung mit einem Stab, insbesondere einem Rakelstab, vorgeschlagen, wobei die Verbindungeinrichtung eine Aufnahmeöffnung aufweist, die ausgebildet ist, ein an einem Stab angeordnetes Verbindungselement axial aufzunehmen, um ein Drehmoment zu übertragen. Dabei weist die Verbindungeinrichtung eine radial an die Aufnahmeöffnung angrenzende Aussparung auf, durch welche ein kraftbeaufschlagtes Formschlusselement der Verbindungseinrichtung in die Aufnahmeöffnung eingreift, wodurch das Verbindungselement axial fixierbar ist. Das Formschlusselement ist an einer ersten Position mit der Verbindungseinrichtung fest verbunden. An einem freien Ende ist das Formschlusselement gegenüber der Verbindungseinrichtung, insbesondere gegenüber der Aufnahmeöffnung bewegbar, um das Formschlusselement aus der Aufnahmeöffnung zu bewegen, wodurch die Fixierung des Verbindungselements aufhebbar ist. Das Formschlusselement kann beispielsweise tangential bewegbar sein. Es sind aber auch andere Bewegungsformen möglich, um die Fixierung des Verbindungselementes aufzuheben.

Die vorgeschlagene Verbindungseinrichtung ermöglicht eine Sicherung gegen axiales Verschieben eines in der Aufnahmeöffnung angeordneten Verbindungselements und damit eines daran angeordneten Stabs. Zudem wird mittels der vorgeschlagenen Verbindungseinrichtung ein, insbesondere werkzeugloses, Betätigen der Verbindungseinrichtung ermöglicht, um ein axiales Ausführen bzw. Einführen eines Stabs, beispielsweise für einen Austausch eines Rakelstabs, aus der bzw. in die Aufnahmeöffnung zu ermöglichen.

Eine solche Verbindungseinrichtung ist üblicherweise als Kupplungseinrichtung an einer Welle bzw. Gelenkwelle anordenbar oder angeordnet, welche mit einem Antrieb verbindbar oder verbunden ist, um den Antrieb mit dem Rakelstab zu verbinden. Hierbei kann die Verbindungseinrichtung beispielsweise hülsenförmig ausgebildet sein, wobei an einer freien Stirnseite der Verbindungseinrichtung eine Aufnahmeöffnung für das Verbindungselement des Stabs gebildet ist. Diese Aufnahmeöffnung ist dabei insbesondere axial zu einer zu übertragenden Drehbewegung angeordnet und ausgebildet, mit dem Verbindungselement eine insbesondere formschlüssige Verbindung zu bilden, um, insbesondere in einer Umfangsrichtung des Stabs bzw. des Verbindungselements, ein Drehmoment bzw. eine Drehkraft zu übertragen. Hierzu ist typischerweise eine prismatisch ausgebildete Hohlgeometrie bekannt, beispielsweise ein Innenvierkant, ein Innensechskant oder ein Innenvielkant mit einer geeigneten Anzahl an Kanten bzw. Flächen, die mit einer korrespondierenden Geometrie des Verbindungselement des Stabes zusammenwirken kann, um die Drehbewegung zu übertragen. In gleicher Weise kann die Aufnahmeöffnung auch ausgebildet sein, mit dem Verbindungselement eine kraft- und/ oder reibschlüssige Verbindung zu bilden, um insbesondere in einer Umfangsrichtung des Stabs bzw. des Verbindungselements ein Drehmoment zu übertragen oder auch eine Kombination aus einer form- und/ oder reib- und/ oder kraftschlüssigen Verbindung darstellen.

An die Aufnahmeöffnung grenzt eine Aussparung an und bildet so eine Öffnung bzw. einen Übergang zu der Aufnahmeöffnung, durch welche das Formschlusselement in die Aufnahmeöffnung eingreifen kann. Die Aussparung ist insbesondere beabstandet von einer aufnahmeöffnungsseitigen Stirnseite der Verbindungseinrichtung angeordnet und kann beispielsweise als radial angeordnete Nut in der Verbindungeinrichtung ausgebildet sein. Hierbei kann die Aussparung eingerichtet sein, das Formschlusselement, insbesondere vollständig, aufzunehmen und insbesondere gegenüber einer axialen Auslenkung abzustützen.

Das kraftbeaufschlagte Formschlusselement ist eingerichtet, einer Öffnungsbewegung des Formschlusselements aus der Aufnahmeöffnung heraus insbesondere mit der beaufschlagten Kraft entgegenzuwirken, um das Formschlusselement in der Aufnahmeöffnung zu halten. Das Formschlusselement kann als Barriere in Querrichtung zu einer Achse des Stabs und damit des Verbindungselements wirken, um somit eine axiale Bewegung des Stabs blockieren.

Insbesondere ist das Formschlusselement eingerichtet bzw. derart angeordnet, dass ein Übergang zwischen Aussparung und Aufnahmeöffnung wenigstens teilweise abgedeckt bzw. verschlossen ist. Hierbei kann das Formschlusselement an der Verbindungseinrichtung, insbesondere in einem Bereich um die Aufnahmeöffnung bzw. den Übergang herum in der Aussparung, insbesondere kraftbewehrt, anliegen oder derart angeordnet sein, dass zwischen Formschlusselement und Verbindungseinrichtung ein Luftspalt besteht. Hierdurch kann eine Empfindlichkeit gegenüber Verschmutzungen verringert werden.

An einer ersten Position ist das Formschlusselement mit der Verbindungseinrichtung fest verbunden, insbesondere um ein Lager für das Formschlusselement zu bilden bzw. das Formschlusselement an der Verbindungseinrichtung zu befestigen. Somit sind die genannten Komponenten der Verbindungeinrichtung fest miteinander verbunden, wodurch ein Schutz vor einem Verlieren von Komponenten bei einer Montage bzw. Demontage eines Stabs ermöglicht ist.

Das Formschlusselement weist ein freies Ende zum Aufheben der Fixierung des Verbindungselements in der Verbindungseinrichtung auf. Das freie Ende erstreckt sich dabei so in der Aussparung, dass es einen gut zugänglichen Angriffspunkt zur Betätigung bietet. Beim Betätigen des Formschlusselements wird dieses insbesondere am freien Ende, insbesondere entgegen einer Richtung seiner Kraftbeaufschlagung, in einer Umfangsrichtung gegenüber der Verbindungseinrichtung bewegt, um das Formschlusselement aus der Aufnahmeöffnung zu bewegen und die axiale Fixierung des Verbindungselements aufzuheben. Diese Bewegung des freien Endes des Formschlusselements kann, insbesondere um einen durch die erste Position geschaffenen Lagerpunkt herum, als Schwenkbewegung erfolgen, wodurch eine einfache Handhabung ermöglicht ist.

Bei einer Ausführungsform der Verbindungseinrichtung ist die Aufnahmeöffnung als Innenvielkant ausgebildet, wobei die Aussparung wenigstens zwei Flächen des Innenvielkants schneidet. Hierbei kann die Aufnahmeöffnung beispielsweise als Innenvierkant, Innensechskant oder Innenachtkant ausgebildet sein, wobei die Aussparung zwei benachbarte Flächen der Geometrie schneidet. Auf diese Weise wird eine Aussparung bereitgestellt, die ein Eingreifen des Formschlusselements in die Aufnahmeöffnung ermöglicht, um somit eine Sicherung eines Verbindungselements bereitzustellen. Benachbarte Flächen, welche auch gekrümmt gestaltet sein können, können beispielsweise auch durch verrundete Übergänge verbunden sein, so dass hier beispielsweise auch Geometrien wie Keilwellen-, Torx- oder Polygonprofile zur Übertragung von Drehmomenten als Innenvielkant verstanden werden. Der Übergang zwischen Aussparung und Aufnahmeöffnung kann hierdurch eine, insbesondere reduzierte, Ausdehnung aufweisen, wodurch einer Verschmutzung bzw. einem Verkleben der Komponenten durch ein Streichmedium vorgebeugt werden kann.

Bei einer Ausführungsform der Verbindungseinrichtung weist das Formschlusselement ein Federelement auf, oder ist als Federelement ausgebildet. Hierbei kann das Federelement eine Biegefeder sein und beispielsweise als Blattfeder, Flachfeder oder Flachformfeder ausgebildet sein. Insbesondere dient das Federelement dabei zum Aufnehmen von Querkräften, welche in axialer Richtung zwischen Verbindungseinrichtung und Verbindungselement wirken. Eine Federkraft eines derartig ausgebildeten Formschlusselements kann eine Sicherung gegen insbesondere unabsichtliches Lösen des Formschlusselements aus der Aufnahmeöffnung darstellen und zudem einen einfachen Aufbau der Verbindungeinrichtung ermöglichen.

Um eine durch das Federelement bereitgestellte Sicherung zu lösen, kann das Federelement insbesondere handbetätigt und unmittelbar ohne Verwendung eines hierfür erforderlichen Werkzeugs am freien Ende bewegt bzw. angehoben werden, wodurch sich das Federelement aus der Aufnahmeöffnung bewegt und damit ein in der Aufnahmeöffnung befindliches Verbindungselement freigeben kann. Dabei kann das Federelement um ein an der ersten Position bereitgestelltes bzw. ausgebildetes Lager, insbesondere bogenförmig, in radialer Richtung entgegen einer Federkraft des Federelements aus der Aufnahmeöffnung herausbewegt werden.

Das Formschlusselement kann an seinem insbesondere von der ersten Position abgewandten freien Ende ein Angriffselement aufweisen. Das Angriffselement kann insbesondere durch eine Umbiegung oder Falzung, insbesondere eine ösenlose Falzung, gebildet sein. Hierdurch kann eine, insbesondere werkzeuglose, Betätigung des Federelements ermöglicht werden, da das Formschlusselement beispielsweise von einem Benutzer leichter ergriffen und bewegt werden kann.

Bei einer Ausführungsform ist das Formschlusselement als, insbesondere flache, Blattfeder ausgebildet und kann tangential zu der Aufnahmeöffnung ausgerichtet in der Aussparung angeordnet sein und/oder ausgebildet sein, wenigstens teilweise von der Aufnahmeöffnung aufgenommen zu werden, um diese radial wenigstens teilweise zu schießen bzw. abzudecken. Hierbei kann das Formschlusselement in einer, insbesondere tangential zur Aufnahmeöffnung liegenden Ebene der Aussparung bzw. tangential zur Aufnahmeöffnung zur angeordnet sein und dort mit der Verbindungseinrichtung verbunden sein. Beispielsweise kann eine formschlüssige Verbindung in Form einer Verschraubung vorgesehen sein. Mit dieser Ausführungsform kann ein einfacher Aufbau der Verbindungeinrichtung ermöglicht werden.

Bei einer Ausführungsform ist das Federelement als gebogene bzw. gewinkelte Flachfeder ausgebildet. Insbesondere kann das Formschlusselement einen Winkel von 90° aufweisen, bilden bzw. aufspannen. Hierbei kann die erste Position lotrecht versetzt zu einem freien Ende des Formschlusselements angeordnet sein: Beispielsweise kann die Verbindung des Formschlusselements mit der Verbindungseinrichtung senkrecht bzw. um 90° versetzt zu einer Ebene in welcher das Formschlusselement in die Aufnahmeöffnung eingreift angeordnet sein. Durch diese Ausführungsform kann beispielsweise eine Länge des Formschlusselements und damit ein Hebel des Formschlusselements vergrößert werden, wodurch eine Betätigung bzw. ein Anheben des Formschlusselements erleichtert werden kann.

Bei einer Ausführungsform kann das Formschlusselement als eine, insbesondere abgewinkelte, Flachfeder bzw. Formflachfeder ausgebildet sein, welche eine Vorspannung, insbesondere gegenüber der Aufnahmeöffnung, aufweist. Hierdurch kann in einer Verschlussposition, in welcher das Formschlusselement in der Aufnahmeöffnung angeordnet ist, eine Kraft auf die Verbindungseinrichtung wirken, um das Formschlusselement in Position zu halten. Ein versehentliches Öffnen des Formschlusselements kann somit vermieden bzw. verhindert werden.

Bei einer Ausführungsform weist das Formschlusselement einen Stützkörper auf. Hierbei kann der Stützkörper der Aufnahmeöffnung zugewandt bzw. zugeordnet sein und eingerichtet sein, wenigstens teilweise in diese einzugreifen. Beispielsweise kann ein quaderförmiger Stützkörper an einer der Aufnahmeöffnung zugewandten Flachseite eines als Flachfeder ausgebildeten Formschlusselements angeordnet sein, insbesondere an diesem fixiert bzw. angeschraubt, sein. Durch den Stützkörper kann ein Querschnitt des Formschlusselements erhöht werden, welcher Scherbelastungen insbesondere bei axial am Verbindungselement bzw. zwischen Verbindungseinrichtung und Verbindungselement wirkenden Kräften aufnehmen kann. Hierdurch kann eine maximal aufnehmbare Querbelastung erhöht und beispielsweise ein Auslenken des Formschlusselements bei einer Krafteinwirkung vermieden oder auch verhindert werden.

Bei einer Ausführungsform ist das Formschlusselement in einer Verschlussposition innerhalb eines Umfangs der Verbindungseinrichtung angeordnet, insbesondere derart, dass keine der Komponenten über den äußeren Umfang der Verbindungseinrichtung hinausragt. In einer Verschlussposition greift das Formschlusselement in die Aufnahmeöffnung ein. Das Formschlusselement kann hierbei beispielsweise derart in der Aussparung angeordnet sein bzw. die am Verbindungselement ausgebildete Fixierausnehmung kann derart ausgebildet sein, dass das Formschlusselement bei einem Eingreifen in die Fixierausnehmung des in der Aufnahmeöffnung angeordneten Verbindungselements vollständig in der Aussparung der Verbindungseinrichtung aufgenommen ist. Insbesondere ist eine Längserstreckung des Formschlusselements geringer als ein Durchmesser der Verbindungseinrichtung. Hierdurch kann insbesondere eine Betriebssicherheit erhöht und eine Verschleißanfälligkeit reduziert werden. Beispielsweise kann die Aussparung als Nut ausgebildet sein, welche radial in dem Verbindungselement angeordnet ist, und insbesondere die Aufnahmeöffnung in Umfangrichtung teilweise überragt und diese an einer Stelle derart schneidet, dass das Formschlusselement in die Aufnahmeöffnung eingreifen kann.

Der Umfang der Verbindungseinrichtung kann beispielsweise rund ausgebildet sein oder ein Angriffsmittel für ein Werkzeug, insbesondere zum Erwirken einer Drehbewegung um eine Längsachse der Verbindungseinrichtung oder eines darin aufgenommenen Stabs, aufweisen. Dieses Angriffsmittel kann beispielsweise einen Außenvierkant oder einen Außensechskant aufweisen bzw. als solcher ausgebildet sein und beabstandet von oder angrenzend an eine aufnahmeöffnungsseitige Stirnseite der Verbindungseinrichtung angeordnet sein. Hierdurch kann beispielsweise eine Rotation des Rakelstabs für eine Montage bzw. Demontage ermöglicht werden.

Das Verbindungselement kann ein Anbindungselement für eine Schutzvorrichtung, beispielsweise einen Faltenbalg, aufweisen. Zudem kann das Verbindungselement, insbesondere an seinem der Aufnahmeöffnung abgewandten Ende, eine Kupplungseinrichtung aufweisen, die eingerichtet ist, mit der Antriebsvorrichtung oder einer Komponente der Antriebsvorrichtung verbunden zu werden. Hierdurch kann das Verbindungselement flexibel beispielsweise auch an bestehenden Antriebsvorrichtungen zum Einsatz kommen.

Bei einer Ausführungsform ist das freie Ende des Formschlusselements von einer Umfangsseite der Verbindungseinrichtung her, werkzeuglos bewegbar. Hierzu kann die Aussparung in einem Bereich, in welchem das freie Ende des Formschlusselements angeordnet ist, einen Betätigungsbereich aufweisen, um ein, insbesondere manuelles, Betätigen des Formschlusselements zu ermöglichen. Es kann zusätzlich vorgesehen sein, dass ein Angriffsbereich in bzw. an der Aussparung ausgebildet ist, um eine Zugänglichkeit des Formschlusselements für einen Finger eines Benutzers zu ermöglichen. Beispielsweise kann im Bereich der Aussparung eine Anfasung des Verbindungselements vorgesehen sein, in welche ein freies Ende, insbesondere das freie Ende des Formschlusselements hineinragen kann. Hierdurch kann eine Bedienbarkeit des Formschlusselements und damit der Verbindungseinrichtung verbessert werden.

In einem zweiten Aspekt wird eine Verbindungsvorrichtung zum Verbinden einer Antriebsvorrichtung mit einem Stab, insbesondere einem Rakelstab, vorgeschlagen. Die Verbindungsvorrichtung weist eine hierin beschriebene Verbindungseinrichtung und ein an einem Stab angeordnetes Verbindungselement auf. Das Verbindungselement ist formschlüssig in der Aufnahmeöffnung der Verbindungeinrichtung anordenbar und weist eine radial angeordnete Fixierausnehmung auf, welche eingerichtet ist, ein an der Verbindungseinrichtung angeordnetes Formschlusselement aufzunehmen, um den Stab axial zu fixieren.

Durch die vorgeschlagene Verbindungsvorrichtung kann die Übertragung eines Drehmoments sowie eine Sicherung des Stabs gegen ein Verschieben in axialer Richtung ermöglicht werden. Zudem wird eine Betätigung der Verbindungsvorrichtung, insbesondere zum Lösen der Sicherung, vereinfacht.

Die Verbindungseinrichtung dieser Verbindungsvorrichtung weist dabei Merkmale und Eigenschaften wenigstens einer der vorausgehend beschriebenen Ausführungsformen der Verbindungseinrichtung auf. Darüber hinaus weist auch das Verbindungselement der Verbindungsvorrichtung wenigstens ein Merkmal und/ oder eine Eigenschaft eines bereits vorausgehend im Zusammenhang mit der Verbindungseinrichtung beschriebenen Verbindungselements auf.

Ein Stab einer solchen Verbindungsvorrichtung wie beispielsweise ein Rakelstab weist an wenigstens einem seiner Enden ein Verbindungselement auf, welches eingerichtet ist, formflüssig in der Aufnahmeöffnung angeordnet zu werden bzw. axial in diese eingeschoben zu werden. Diese formschlüssige Verbindung zwischen Verbindungselement und Aufnahmeöffnung ermöglicht die Übertragung einer Drehbewegung in Umfangsrichtung. Bei einigen Ausführungsformen kann der Rakelstab an beiden seiner Enden ein Verbindungselement aufweisen, um beidseitig mit jeweils einer Verbindungseinrichtung verbunden zu werden.

Die Fixierausnehmung ist insbesondere eingerichtet und/oder an dem Verbindungselement derart ausgebildet, dass sie mit der Aussparung der Verbindungseinrichtung fluchtet, wenn das Verbindungselement in der Aufnahmeöffnung angeordnet ist, wobei ein Eingriff des Formschlusselements in die Fixierausnehmung ermöglicht werden kann.

Bei einer Ausführungsform ist die Fixierausnehmung des Verbindungselements umlaufend ausgebildet. Insbesondere ist die Fixierausnehmung als umfangsseitig umlaufende Ausnehmung bzw. Nut oder Absatz ausgebildet, welche(r) eingerichtet ist, das Formschlusselement wenigstens teilweise aufzunehmen. Hierdurch kann eine Montage des Stabs vereinfacht sein, da eine Winkelorientierung der Fixierausnehmung gegenüber dem Verbindungselement vernachlässigt werden kann. Ein Querschnittsprofil der Ausnehmung kann rechtwinklig ausgebildet sein, wodurch eine Gefahr eines Herausrutschens des Verbindungselements durch axial auftretende Kräfte reduziert werden kann.

Bei einer Ausführungsform kann eine Stirnseite des Verbindungselements eine, insbesondere randseitig umlaufende, Fase aufweisen. Durch eine solche Fase kann das Formschlusselement bei einem Einschieben des Verbindungselements an der Fase gleiten, um ein Platzieren des Verbindungselements in der Aufnahmeöffnung zu erleichtern.

In einem weiteren Aspekt wird ein Verfahren zum Tauschen eines Stabs, insbesondere eines Rakelstabs vorgeschlagen, mittels einer Verbindungsvorrichtung, welche eine Verbindungseinrichtung mit einer Aufnahmeöffnung aufweist, in welcher ein an dem Stab angeordnetes Verbindungselement formschlüssig anordenbar ist, um ein Drehmoment zu übertragen. Die Verbindungeinrichtung weist eine radial an die Aufnahmeöffnung angrenzende Aussparung auf, durch welche ein kraftbeaufschlagtes Formschlusselement der Verbindungseinrichtung in die Aufnahmeöffnung und in eine radial angeordnete Fixierausnehmung des Verbindungselements eingreift, um den Stab axial zu fixieren. Dabei ist das Formschlusselement an einer ersten Position mit der Verbindungseinrichtung fest verbunden. Zum Lösen einer Fixierung des Verbindungselements wird das Formschlusselement in einem Löseschritt an einem freien Ende gegenüber der Verbindungseinrichtung bewegt, beispielsweise tangential bewegt, um das Formschlusselement aus der Aufnahmeöffnung zu bewegen.

Das vorgeschlagene Verfahren ermöglicht ein einfaches, insbesondere werkzeugloses manuelles Lösen einer insbesondere formschlüssigen Sicherung des Stabs in der Verbindungseinrichtung.

Die in Verbindung mit dem Verfahren zum Tauschen eines Stabs verwendete Verbindungsvorrichtung weist Merkmale und Eigenschaften wenigstens einer der vorausgehend beschriebenen Ausführungsformen der Verbindungsvorrichtung und insbesondere der Verbindungseinrichtung sowie des Verbindungselements auf.

Weitere Merkmale, Vorteile und Anwendungsmöglichkeiten der Erfindung ergeben sich aus der nachfolgenden Beschreibung im Zusammenhang mit den Figuren. Es zeigt:
- Fig. 1: eine schematische Darstellung eines ersten beispielhaften Ausführungsbeispiels einer Verbindungsvorrichtung zum Verbinden einer Antriebsvorrichtung mit einem Stab;
- Fig. 2: eine schematische Darstellung eines zweiten beispielhaften Ausführungsbeispiels einer Verbindungsvorrichtung zum Verbinden einer Antriebsvorrichtung mit einem Stab;
- Fig. 3a bis 3c: eine schematische Darstellung beispielhafter Verbindungseinrichtungen zum Verbinden einer Antriebsvorrichtung mit einem Stab; und
- Fig. 4: eine schematische Darstellung eines Ablaufs des erfindungsgemäßen Verfahrens zum Tauschen eines Stabs.

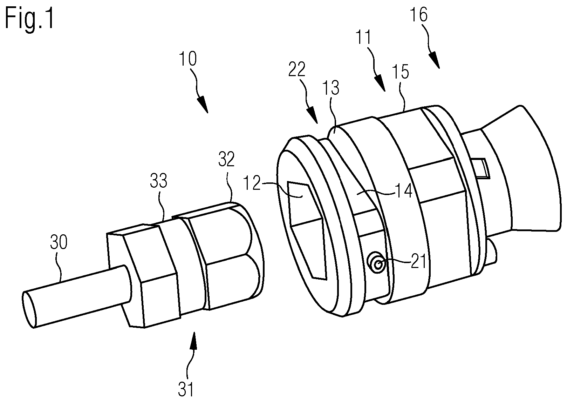

**Fig. 1** zeigt eine schematische Darstellung einer beispielhaften Verbindungsvorrichtung 10 zum Verbinden einer Antriebsvorrichtung mit einem Stab 30, hier einem Rakelstab 30. Die Verbindungsvorrichtung 10 weist eine Verbindungseinrichtung 11 mit einer Aufnahmeöffnung 12 auf, welche in diesem Ausführungsbeispiel als Innensechskant ausgebildet ist. Die Aufnahmeöffnung 12 ist ausgebildet, ein an einem Stab 30 angeordnetes Verbindungselement 31 axial aufzunehmen, um ein Drehmoment zu übertragen.

Die Verbindungseinrichtung 11 weist umfangsseitig ein Angriffsmittel 15 auf, um eine formschlüssige Verbindung mit einem Werkzeug und damit eine Drehung der Verbindungsvorrichtung 10 mit Rakelstab 30 zu ermöglichen. Das Angriffsmittel 15 ist in dem Ausführungsbeispiel als Außenvierkant ausgebildet und beabstandet von einer Stirnseite der Verbindungseinrichtung 11 angeordnet, welche die Aufnahmeöffnung 12 aufweist. An einem dieser Stirnseite gegenüberliegenden Ende weist die Verbindungseinrichtung 11 eine Kupplungseinrichtung 16 auf, welche eingerichtet ist mit einer Antriebsvorrichtung (nicht dargestellt) verbunden zu werden.

Die Verbindungseinrichtung 11 weist eine radial an die Aufnahmeöffnung 12 angrenzende Aussparung 13 auf, durch welche ein kraftbeaufschlagtes Formschlusselement 14 der Verbindungseinrichtung 11 in die Aufnahmeöffnung 12 eingreifen kann, wodurch das Verbindungselement 31 axial fixierbar ist. Das Formschlusselement 14 ist an einer ersten Position 21 mit der Verbindungseinrichtung 11 fest verbunden. In dem dargestellten Ausführungsbeispiel ist das Formschlusselement 14 als abgewinkelte Flachfeder, die einen Winkel von 90° einschließt, ausgebildet, welche an einem freien Ende 22 gegenüber der Verbindungseinrichtung 11 tangential bewegbar ist. Hierdurch ist das Formschlusselement 14 aus der Aufnahmeöffnung 12 bewegbar, wodurch die Fixierung des Verbindungselements 31 aufhebbar ist.

Das Verbindungselement 31 ist in dem dargestellten Ausführungsbeispiel als Außensechskant ausgebildet, um formschlüssig in der Aufnahmeöffnung 12 aufgenommen zu werden und so eine Übertragung einer Drehbewegung um eine Längsachse des Stabs 30 zu ermöglichen. An seiner Stirnseite weist das Verbindungselement 31 eine Fase 32 auf, welche ein Einschieben des Verbindungselements 31 in die Aufnahmeöffnung 12 erleichtern kann.

Das Verbindungselement 31 weist eine radial angeordnete Fixierausnehmung 33 auf, welche in dem dargestellten Ausführungsbeispiel als umlaufende ausgebildete Nut mit einem rechtwinkligen Querschnitt ausgebildet ist, um eine Axialbewegung relativ zu dem in einer Verschlussposition darin angeordneten Formschlusselement 14 zu blockieren. Die Fixierausnehmung 33 ist beabstandet von der freien Stirnseite des Verbindungselements 31 angeordnet, um eine axiale Fixierung in beide Achsrichtungen zu ermöglichen. In einer Verschlussposition, in welcher das Verbindungselement 31 von der Aufnahmeöffnung 12 aufgenommen ist, fluchtet die Fixierausnehmung 33 mit der Aussparung 13, um ein Eingreifen des Formschlusselements 14 und somit eine axiale Fixierung bzw. Sicherung zwischen der Verbindungseinrichtung 11 und dem Verbindungselement 31 zu ermöglichen.

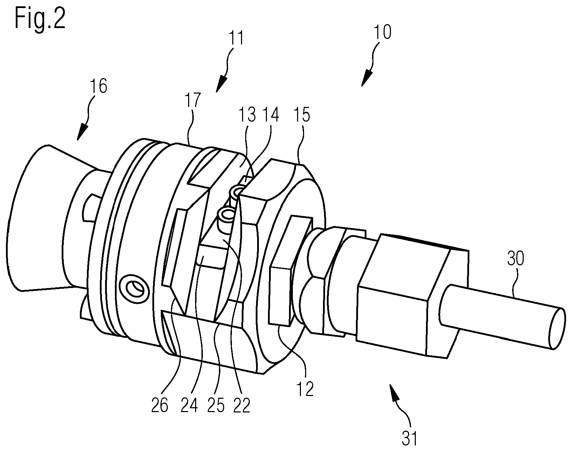

**Fig. 2** zeigt beispielhaft ein zweites beispielhaftes Ausführungsbeispiel einer Verbindungsvorrichtung 10. Die Verbindungsvorrichtung 10 weist eine Verbindungseinrichtung 11 sowie einen Rakelstab 30 mit einem Verbindungselement 31 auf, welche hier in einem nicht montierten Zustand dargestellt sind, also nicht miteinander verbunden sind bzw. in Eingriff stehen.

In diesem Ausführungsbeispiel weist die Verbindungseinrichtung 11 ein in einer Fixierausnehmung 13 angeordnetes kraftbeaufschlagtes Formschlusselement 14 auf, welches als Flachfederelement ausgebildet ist. An einer der Aufnahmeöffnung 12 gegenüberliegenden Flachseite des Federelements 14 sind Befestigungsmittel in Form von Schrauben dargestellt, mittels welchen ein in Fig. 2 nicht sichtbarer Stützkörper 18 an dem Federelement 14 befestigt ist. An seinem der ersten Position 21 abgewandten Ende weist das Formschlusselement 14 ein freies Ende 22 auf, um ein Bewegen des Formschlusselements 14 zu ermöglichen.

In dem dargestellten Ausführungsbeispiel weist das Formschlusselement 14 am freien Ende 22 ein Angriffselement 24 auf, um eine Betätigung des Federelements 14, insbesondere ein manuelles Anheben, beispielsweise mit einem Finger eines Benutzers, zu ermöglichen. Das Formschlusselement 14 ist in der Aussparung 13 aufgenommen, welche in einem dem freien Ende des Formschlusselement 14 zugeordneten Bereich einen Betätigungsbereich 25 aufweist, wodurch das freie Ende des Formschlusselements 14 innerhalb eines Umfangs der Verbindungseinrichtung 11 frei bzw. betätigbar angeordnet ist. In dem Bereich des freien Endes des Formschlusselements 14 kann die Aussparung 13 einen Angriffsbereich 26 aufweisen, der den Betätigungsbereich 25 erweitert, um ein Ergreifen des Formschlusselements 14 beispielsweise mit einem Finger zu ermöglichen.

Am Umfang der Verbindungseinrichtung 11 ist ein Angriffsmittel 15 insbesondere zum Drehen der Verbindungseinrichtung 11 um eine Längsachse vorgesehen, welches an eine freie Stirnseite der Verbindungseinrichtung 11 angrenzt und in axialer Richtung zu beiden Seiten der Aussparung 13 angeordnet ist. Zudem weist die Verbindungseinrichtung 11 dieses Ausführungsbeispiels eine Anbindungseinrichtung 17 für eine Schutzvorrichtung auf.

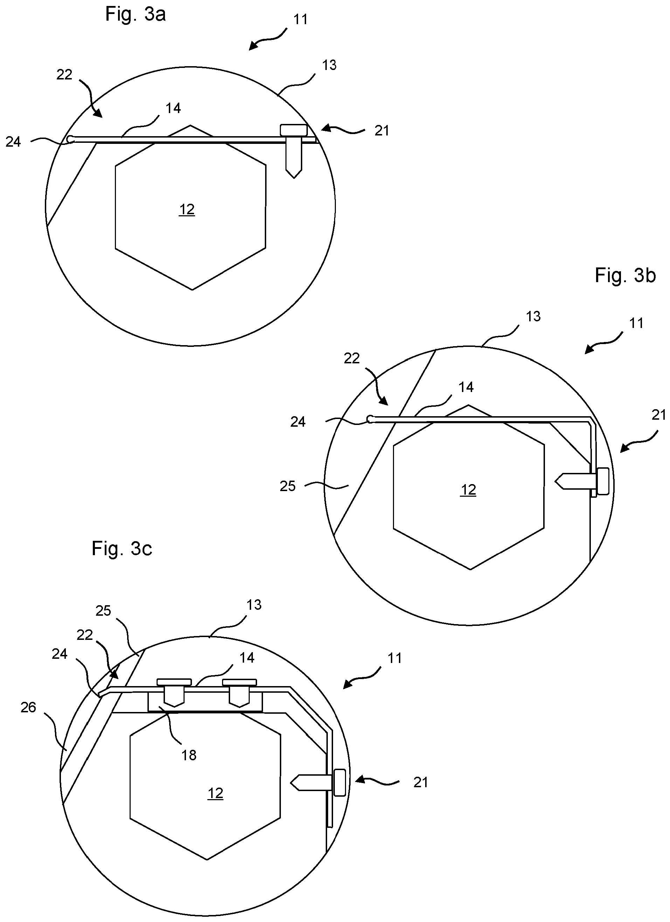

**Fig. 3a bis 3c** zeigen jeweils eine Schnittansicht eines Ausführungsbeispiels einer Verbindungseinrichtung 11 in einer Ebene senkrecht zu einer Drehachse der Verbindungsvorrichtung 12 bzw. in einer Bewegungsebene eines Formschlusselements 14. Die Verbindungseinrichtung 11 weist jeweils eine als Innensechskant ausgebildete Aufnahmeöffnung 12 auf, an welche in radialer Richtung eine Aussparung 13 angrenzt, um mit dieser einen Übergang bzw. eine Öffnung zu bilden.

Bei dem in Fig. 3a dargestellten Ausführungsbeispiel ist das Formschlusselement 14 als gerade Blattfeder ausgebildet und greift in der dargestellten Verschlussposition in die Aufnahmeöffnung 12 ein, um ein darin angeordnetes Verbindungselement 31 (nicht dargestellt) eines Rakelstabs 30 axial zu fixieren. Das Formschlusselement 14 ist an einer ersten Position 21 mittels einer Schraube fest mit der Verbindungseinrichtung 11 verbunden, um ein Lager für das Formschlusselement 14 zu bilden.

Die Aussparung 13 weist in einem Bereich eines freien Endes 22 des Formschlusselements 14 einen Betätigungsbereich 25 auf, um eine Betätigung bzw. ein Bewegen des freien Endes 22 zu ermöglichen. Das Formschlusselement 14 weist ein Angriffselement 24 auf, um ein manuelles Ergreifen bzw. Betätigen des Formschlusselements 14 zu erleichtern.

Fig. 3b zeigt eine weitere Ausführungsform eines Verbindungselements 11, wobei eine darin ausgebildete Aufnahmeöffnung 12 an eine Aussparung 13 der Verbindungseinrichtung 11 grenzt, um ein Formschlusselement 14 wenigstens teilweise aufzunehmen. Das Formschlusselement 14 ist als Flachfeder ausgebildet und spannt zwischen einer ersten Position 21 und einem freien Ende 22 einen Winkel von 90° auf. Hierdurch kann eine Länge des Formschlusselements 14 verlängert werden und damit ein verbesserter Hebel zur Betätigung des Formschlusselements 14 bereitgestellt werden.

Im Bereich eines freien Endes des Formschlusselements 14 weist die Aussparung 13 einen Betätigungsbereich 25 auf, um ein Bewegen des Formschlusselements 14 zu ermöglichen. Zudem ist ein Angriffsbereich 26 an der Aussparung 13 angeordnet um ein Ergreifen eines Angriffselements 24 des Formschlusselements 14 mit einem Finger zu ermöglichen.

Fig. 3c zeigt ein weiteres Ausführungsbeispiel einer Verbindungsvorrichtung 11, welche weitgehend den Ausführungsbeispielen der Fig. 3a und 3b entspricht.

In dem in Fig. 3c dargestellten Ausführungsbeispiel ist das Formschlusselement 14 als abgewinkelte Flachfeder ausgebildet, welche einen Winkel von 90° einschließt und gegenüber der Aufnahmeöffnung 12 vorgespannt ist, um einem versehentlichen Lösen des Formschlusselements 14 aus der Aufnahmeöffnung 12 vorzubeugen. An einer der Aufnahmeöffnung 12 zugeordneten Flachseite des Formschlusselements 14 ist ein Stützkörper 18 angeordnet, welcher in einer Verschlussposition wenigstens teilweise in die Aufnahmeöffnung 12 eingreift. Mittels des Stützkörpers kann ein Querschnitt des Formschlusselements 14 vergrößert werden, um eine Aufnahme von Querkräften weiter zu verbessern.

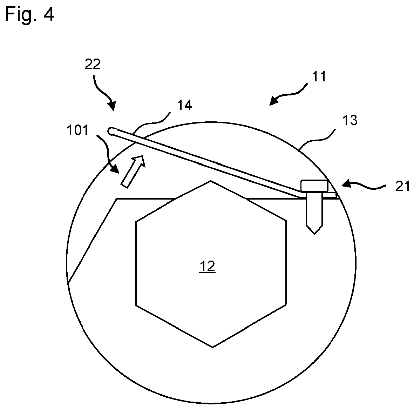

**Fig. 4** zeigt eine schematische Darstellung eines Ablaufs eines Ausführungsbeispiels des Verfahrens zum Tauschen eines Stabs 30. Fig. 4 zeigt eine Verbindungseinrichtung 11 gemäß dem Ausführungsbeispiel der Fig. 3a, wobei in einem Schritt 101 (Bewegungsrichtung dargestellt durch einen Pfeil) das Formschlusselement 14 an einem zweiten Ende 22 gegenüber der Verbindungseinrichtung 11 bewegt wird, um das Formschlusselement 14 aus der Aufnahmeöffnung 12 zu bewegen und eine Fixierung des Verbindungselements 31 des Stabs 30 zu lösen. Hierbei wird das Formschlusselement 14 um eine erste Position 21, welche ein Lager für das Formschlusselement 14 darstellt, bewegt und so aus der Aufnahmeöffnung 12 und einer Fixierausnehmung 33 gelöst, um das Verbindungselement 31 freizugeben.

### BEZUGSZEICHENLISTE

- 10: Verbindungsvorrichtung
- 11: Verbindungseinrichtung
- 12: Aufnahmeöffnung
- 13: Aussparung
- 14: kraftbeaufschlagtes Formschlusselement
- 15: Angriffsmittel
- 16: Kupplungseinrichtung
- 17: Anbindungseinrichtung
- 18: Stützkörper
- 21: erste Position
- 22: freies Ende
- 24: Angriffselement
- 25: Betätigungsbereich
- 26: Angriffsbereich
- 30: Stab, Rakelstab
- 31: Verbindungselement
- 32: Fase
- 33: Fixierausnehmung

- 101: Löseschritt

## Patentansprüche

1. Verbindungseinrichtung (11) zum Verbinden einer Antriebsvorrichtung mit einem Stab (30), insbesondere einem Rakelstab, wobei die Verbindungeinrichtung (11) eine Aufnahmeöffnung (12) aufweist, die ausgebildet ist, ein an einem Stab (30) angeordnetes Verbindungselement (31) axial aufzunehmen, um ein Drehmoment zu übertragen, und wobei die Verbindungeinrichtung (11) eine radial an die Aufnahmeöffnung (12) angrenzende Aussparung (13) aufweist, durch welche ein kraftbeaufschlagtes Formschlusselement (14) der Verbindungseinrichtung (11) in die Aufnahmeöffnung (12) eingreift, wodurch das Verbindungselement (31) axial fixierbar ist, wobei das Formschlusselement (14) an einer ersten Position (21) mit der Verbindungseinrichtung (11) fest verbunden ist und an einem freien Ende (22) gegenüber der Verbindungseinrichtung (11) bewegbar ist, um das Formschlusselement (14) aus der Aufnahmeöffnung (12) zu bewegen, wodurch die Fixierung des Verbindungselements (31) aufhebbar ist, wobei das Formschlusselement (14) als Federelement ausgebildet ist und **dadurch gekennzeichnet, dass** das Federelement eine Biegefeder ist, die als Blattfeder, Flachfeder oder Flachformfeder ausgebildet ist

2. Verbindungseinrichtung (11) nach Anspruch 1, wobei die Aufnahmeöffnung (12) als Innenvielkant ausgebildet ist und die Aussparung (13) wenigstens zwei Flächen des Innenvielkants schneidet.

3. Verbindungseinrichtung (11) nach einem der vorherigen Ansprüche, wobei das Federelement zum Aufnehmen von Querkräften dient, welche in axialer Richtung zwischen Verbindungseinrichtung (11) und Verbindungselement (31) wirken.

4. Verbindungseinrichtung (11) nach einem der vorhergehenden Ansprüche, wobei das Formschlusselement (14) einen Stützkörper (18) aufweist.

5. Verbindungseinrichtung (11) nach einem der vorhergehenden Ansprüche, wobei das Formschlusselement (14) in einer Verschlussposition innerhalb eines Umfangs der Verbindungseinrichtung (11) angeordnet ist.

6. Verbindungseinrichtung (11) nach einem der vorhergehenden Ansprüche, wobei das freie Ende (22) des Formschlusselements (14) von einer Umfangsseite der Verbindungeinrichtung (11) her, insbesondere werkzeuglos, bewegbar ist.

7. Verbindungsvorrichtung (10) zum Verbinden einer Antriebsvorrichtung mit einem Stab (30), insbesondere einem Rakelstab, aufweisend eine Verbindungseinrichtung (11) nach einem der vorhergehenden Ansprüche und ein an einem Stab (30) angeordnetes Verbindungselement (31), wobei das Verbindungselement (31) formschlüssig in der Aufnahmeöffnung (12) der Verbindungeinrichtung (11) anordenbar ist und eine radial angeordnete Fixierausnehmung (33) aufweist, welche eingerichtet ist, ein an der Verbindungseinrichtung (11) angeordnetes Formschlusselement (14) aufzunehmen, um den Stab (30) axial zu fixieren.

8. Verbindungsvorrichtung (10) nach Anspruch 7, wobei die Fixierausnehmung (33) des Verbindungselements (31) umlaufend ausgebildet ist.

9. Verbindungsvorrichtung (10) nach Anspruch 7 oder 8, wobei das Verbindungselement (31) an seiner Stirnseite eine Fase (32) aufweist.

10. Verfahren zum Tauschen eines Stabs (30), insbesondere Rakelstabs (30), mittels einer Verbindungsvorrichtung (10), welche eine Verbindungseinrichtung (11) mit einer Aufnahmeöffnung (12) aufweist, in welcher ein an dem Stab (30) angeordnetes Verbindungselement (31) formschlüssig angeordnet ist, um ein Drehmoment zu übertragen, und wobei die Verbindungeinrichtung (11) eine radial an die Aufnahmeöffnung (12) angrenzende Aussparung (13) aufweist, durch welche ein kraftbeaufschlagtes Formschlusselement (14) der Verbindungseinrichtung (11) in die Aufnahmeöffnung (12) und in eine radial angeordnete Fixierausnehmung (33) des Verbindungselements (31) eingreift, um den Stab (30) axial zu fixieren, wobei das Formschlusselement (14) an einer ersten Position (21) mit der Verbindungseinrichtung (11) fest verbunden ist wobei das Formschlusselement (14) als Federelement ausgebildet ist und **dadurch gekennzeichnet, dass** das Federelement eine Biegefeder ist, die als Blattfeder, Flachfeder oder Flachformfeder ausgebildet ist. und wobei das Formschlusselement (14) in einem Löseschritt (101) an einem freien Ende (22) gegenüber der Verbindungseinrichtung (11) bewegt wird, um das Formschlusselement (14) aus der Aufnahmeöffnung (12) zu bewegen und die Fixierung des Verbindungselements (31) zu lösen.

## Claims

1. Connecting device (11) for connecting a drive device to a rod (30), in particular a squeegee rod, wherein the connecting device (11) has a receiving opening (12) which is designed to axially receive a connecting element (31) arranged on a rod (30) in order to transmit a torque, and wherein the connecting device (11) has a recess (13) which is radially adjacent to the receiving opening (12) and through which a force-applied positive-locking element (14) of the connecting device (11) engages in the receiving opening (12), whereby the connecting element (31) can be fixed axially, the positive-locking element (14) being firmly connected to the connecting device (11) at a first position (21) and being movable at a free end (22) relative to the connecting device (11) in order to move the positive-locking element (14) out of the receiving opening (12), whereby the fixing of the connecting element (31) can be released, wherein the positive-locking element (14) is designed as a spring element, **characterised in that** the spring element is a bending spring which is designed as a leaf spring, flat spring or flat-form spring

2. Connecting device (11) according to claim 1, wherein the receiving opening (12) is designed as an internal polygon and the recess (13) intersects at least two surfaces of the internal polygon.

3. Connecting device (11) according to one of the preceding claims, wherein the spring element serves to absorb transverse forces acting in the axial direction between the connecting device (11) and the connecting element (31).

4. Connecting device (11) according to one of the preceding claims, wherein the positive-locking element (14) comprises a supporting body (18).

5. Connecting device (11) according to one of the preceding claims, wherein the positive-locking element (14) is arranged in a locking position within a circumference of the connecting device (11).

6. Connecting device (11) according to one of the preceding claims, wherein the free end (22) of the positive-locking element (14) is movable from a circumferential side of the connecting device (11), in particular without tools.

7. Connecting device (10) for connecting a drive device to a rod (30), in particular a doctor rod, comprising a connecting device (11) according to one of the preceding claims and a connecting element (31) arranged on a rod (30), wherein the connecting element (31) can be arranged positively in the receiving opening (12) of the connecting device (11) and has a radially arranged fixing recess (33), which is arranged to receive a positive-locking element (14) arranged on the connecting device (11) in order to fix the rod (30) axially.

8. Connecting device (10) according to claim 7, wherein the fixing recess (33) of the connecting element (31) is formed circumferentially.

9. Connecting device (10) according to claim 7 or 8, wherein the connecting element (31) has a chamfer (32) on its end face.

10. Method for exchanging a rod (30), in particular a doctor blade rod (30), by means of a connecting device (10) which has a connecting device (11) with a receiving opening (12) in which a connecting element (31) arranged on the rod (30) is arranged in a positive-locking manner in order to transmit a torque, and wherein the connecting device (11) has a recess (13) which is radially adjacent to the receiving opening (12) and through which a force-applied positive-locking element (14) of the connecting device (11) engages in the receiving opening (12) and in a radially arranged fixing recess (33) of the connecting element (31), in order to fix the rod (30) axially, the positive-locking element (14) being firmly connected to the connecting device (11) at a first position (21), the positive-locking element (14) being designed as a spring element, **characterised in that** the spring element is a bending spring which is designed as a leaf spring, flat spring or flat shaped spring, flat spring or flat moulded spring, and wherein the positive-locking element (14) is moved at a free end (22) relative to the connecting device (11) in a release step (101) in order to move the positive-locking element (14) out of the receiving opening (12) and release the fixing of the connecting element (31).

## Revendications

1. Dispositif de liaison (11) pour relier un dispositif d'entraînement à une tige (30), en particulier une tige de racle, le dispositif de liaison (11) présentant une ouverture de réception (12) qui est conçue pour recevoir axialement un élément de liaison (31) disposé sur une tige (30), pour transmettre un couple de rotation, et le dispositif de liaison (11) présentant un évidement (13) adjacent radialement à l'ouverture de réception (12), à travers lequel un élément à engagement positif (14) du dispositif de liaison (11), sollicité par une force, s'engage dans l'ouverture de réception (12), grâce à quoi l'élément de liaison (31) peut être fixé axialement, l'élément de blocage de forme (14) étant relié de manière fixe au dispositif de liaison (11) dans une première position (21) et pouvant être déplacé à une extrémité libre (22) par rapport au dispositif de liaison (11) afin de déplacer l'élément de blocage de forme (14) hors de l'ouverture de réception (12), ce qui permet de supprimer la fixation de l'élément de liaison (31), l'élément de fermeture géométrique (14) étant réalisé sous forme d'élément de ressort, **caractérisé en ce que** l'élément de ressort est un ressort de flexion qui est réalisé sous forme de ressort à lame, de ressort plat ou de ressort de forme plate.

2. Dispositif d'assemblage (11) selon la revendication 1, dans lequel l'ouverture de réception (12) est conçue comme un polygone intérieur et l'évidement (13) coupe au moins deux surfaces du polygone intérieur.

3. Dispositif d'assemblage (11) selon l'une des revendications précédentes, dans lequel l'élément de ressort sert à absorber les forces transversales qui agissent dans la direction axiale entre le dispositif d'assemblage (11) et l'élément d'assemblage (31).

4. Dispositif d'assemblage (11) selon l'une des revendications précédentes, dans lequel l'élément de verrouillage de forme (14) comprend un corps de support (18).

5. Dispositif de connexion (11) selon l'une quelconque des revendications précédentes, dans lequel l'élément de verrouillage de forme (14) est disposé dans une position de verrouillage à l'intérieur d'une périphérie du dispositif de connexion (11).

6. Dispositif de connexion (11) selon l'une des revendications précédentes, dans lequel l'extrémité libre (22) de l'élément de fermeture de forme (14) peut être déplacée à partir d'un côté périphérique du dispositif de connexion (11), en particulier sans outil.

7. Dispositif de liaison (10) pour relier un dispositif d'entraînement à une tige (30), en particulier une tige de racle, présentant un dispositif de liaison (11) selon l'une des revendications précédentes et un élément de liaison (31) disposé sur une tige (30), l'élément de liaison (31) pouvant être disposé par complémentarité de forme dans l'ouverture de réception (12) du dispositif de liaison (11) et présentant un évidement de fixation (33) disposé radialement, qui est conçu pour recevoir un élément de complémentarité de forme (14) disposé sur le dispositif de liaison (11), afin de fixer axialement la tige (30).

8. Dispositif de connexion (10) selon la revendication 7, dans lequel l'évidement de fixation (33) de l'élément de connexion (31) est circonférentiel.

9. Dispositif de liaison (10) selon la revendication 7 ou 8, dans lequel l'élément de liaison (31) présente un chanfrein (32) sur sa face frontale.

10. Procédé pour échanger une tige (30), en particulier une tige de racle (30), au moyen d'un dispositif de liaison (10) qui présente un dispositif de liaison (11) avec une ouverture de réception (12) dans laquelle un élément de liaison (31) disposé sur la tige (30) est disposé par complémentarité de forme afin de transmettre un couple, et le dispositif de liaison (11) présentant un évidement (13) adjacent radialement à l'ouverture de réception (12), à travers lequel un élément à engagement positif (14) du dispositif de liaison (11), sollicité par une force, s'engage dans l'ouverture de réception (12) et dans un évidement de fixation (33), disposé radialement, de l'élément de liaison (31), pour fixer axialement la tige (30), l'élément de fermeture géométrique (14) étant relié fixement au dispositif de liaison (11) dans une première position (21), l'élément de fermeture géométrique (14) étant conçu comme un élément de ressort, **caractérisé en ce que** l'élément de ressort est un ressort de flexion qui est conçu comme un ressort à lame, ressort plat ou ressort de forme plate, et dans lequel l'élément de fermeture de forme (14) est déplacé dans une étape de libération (101) à une extrémité libre (22) par rapport au dispositif de liaison (11), afin de déplacer l'élément de fermeture de forme (14) hors de l'ouverture de réception (12) et de libérer la fixation de l'élément de liaison (31).
